# EUROPEAN PATENT SPECIFICATION

(11) **EP 3 953 013 B1**
(45) Date of publication and mention of the grant of the patent: **17.09.2025**
(21) Application number: 20730100.3
(22) Date of filing: 08.04.2020
(51) Int. Cl.: B01D 25/164, B01D 25/172, B01D 25/19

(54) **FILTERPRESS STRUCTURE**
FILTERPRESSENSTRUKTUR
STRUCTURE DE FILTRE-PRESSE

(30) Priority: 08.04.2019 IT 201900005318; 07.04.2020 IT 202000007360
(43) Date of publication of application: 16.02.2022
(60) Divisional application: 23172955.9
(73) Proprietor: MATEC INDUSTRIES SPA, 20121 Milano (MI) (IT)
(72) Inventor: GOICH, Matteo, 54038 MONTIGNOSO (MS) (IT); BERTOLUCCI, Massimo, 54100 MASSA (MS) (IT)
(74) Representative: Mari, Marco Giovanni
(86) International application number: PCT/IB2020/053335
(87) International publication number: WO 2020/208533

(56) References cited:
- EP-A1- 0 734 752
- EP-A1- 2 388 061
- BE-A- 884 951
- GB-A- 1 074 643
- GB-A- 2 040 716
- US-A- 5 139 664
- US-A- 5 846 415

## Description

### Field of the invention

The present invention relates to a filterpress structure used for dehydration of sludge by mechanical process means of separation solid-liquid.

### State of the art

Are known filterpress used in clarification and dehydration plants of sludge or other derivatives, for example, by stone or the like.

In particular, a filterpress allows to dehydrate a flow of mud pumped as input to obtain from this solid mud block, easily to remove.

According to a structural point of view, a filterpress comprises a plurality of filtering plates arranged on a frame which are movable by at least one pneumatic cylinder. The filtering plates are shaped to conveying the mud into a space, that defines a treat chamber. Each treat chamber contains a predetermined amount of mud to be treated. At least one actuating piston, commonly pneumatic, is arranged for operating the filterpress and move the filtering plates selectively between a closed configuration, of compression, and an open configuration, of unloading.

According to the prior art, are known filterpress wherein the compression action on the filtering plates is operated by a pull movement of the pneumatic cylinder.

The same applicant has developed a system and a filterpress architecture, wherein the compression action on the filtering plates is operated by a push movement the pneumatic cylinder.

The filterpress are classify according to the boundary size of the filtering plates.

For large size of filtering plates, i.e. with relevant filtering surfaces, the common machines and architectures are not adapted to compress in a homogeneous and effective way the sludge to be treat and therefore are adapted to low flow rate and only for selected types of sludge.

Document US 5 139 664 A discloses a filterpress comprising:
- a support frame having a first fixed shoulder and a second fixed shoulder opposite to each other;
- a movable shoulder arranged between said first fixed shoulder and said second fixed shoulder,
- a plurality of filtering plates functionally arranged between said movable shoulder and said second fixed shoulder that extend along a longitudinal axis;
- actuating means that is adapted to move selectively said movable shoulder between a closed configuration, in which said filtering plates are compacted against said second fixed shoulder, and an open configuration, in which at least one plurality of filtering plates are spaced from each other to unload a solid mud block.

Said actuating means comprise one first couple of pneumatic actuating cylinders parallel to each other arranged on a first reference plane and a second couple of pneumatic actuating cylinders parallel to each other arranged on a second reference plane overlapped to said first reference plane.

Said support frame comprises one first support beam and a second support beam that extend along said longitudinal axis between said first and second fixed shoulder, said first support beam and second support beam being arranged on opposite sides to each other with respect to said filtering plates.

### Summary of the invention

It is therefore a feature of the present invention to provide a filterpress structure with high treatment capacity of sludge.

It is also a feature of the present invention to provide a filterpress structure that is adapted to obtain an increased performance, about double, with respect to the filterpress according to the prior art, maintaining a structural conformation substantially equal to each other and comparable dimension.

It is also a feature of the present invention to provide a filterpress that is structurally easy to realize and to move.

The invention is set out in the appended set of claims.

Said filterpress structure comprises:
- a support frame having a first fixed shoulder and a second fixed shoulder opposite to each other;
- a movable shoulder arranged between said first fixed shoulder and said second fixed shoulder,
- a plurality of filtering plates functionally arranged between the movable shoulder and the second fixed shoulder that extend along a longitudinal axis;
- actuating means arranged between the first fixed shoulder and the movable shoulder and that is adapted to move selectively the movable shoulder between a closed configuration, in which the filtering plates are compacted against the second fixed shoulder, and an open configuration, in which at least one plurality of filtering plates are spaced from each other to unload the solid mud block;
wherein said actuating means comprises at least one first couple of actuating pneumatic cylinders parallel to each other arranged on a first reference plane and a second couple of actuating pneumatic cylinders parallel to each other arranged on a second reference plane overlapped to said first reference plane.

Advantageously, is provided a third couple of actuating pneumatic cylinders parallel to each other arranged on a third reference plane overlapped to said second reference plane.

The arrangement of two couples of pneumatic cylinders overlapped and stacked to each other allows to distribute homogeneously the acting load on the filtering plates, with relevant size filtering surface. The action of the pistons causes a higher load that acts on the filtering plates and especially a uniformly load distributed on all the surface of the filtering plates. Such architecture is particularly suitable for inert and clay materials, which have a sludge more difficult to treat and require a high pressure. The filterpress according to the present invention can operate up at a pressure of the inlet material larger than 20 Bar.

Said support frame comprises at least one first support beam and a second support beam that extend along said longitudinal axis between said first and second fixed shoulder, said first support beam and second support beam arranged on opposite sides to each other in said filtering plates.

Two couples of side support beams are provided that extend along said longitudinal axis and which are arranged on opposite sides to each other extending between said first and second fixed shoulder. Each couple being made by support beams parallel to each other.

The support beams act as support and slide path for the filtering plates. In addition, allow to contrast the push load generated by the pneumatic cylinders during the compression of the filtering plates.

Said support frame comprises, furthermore, at least a first portal hoops and a second portal hoops integrally connected to said support beams. This way, by a structural viewpoint, the combination of portal hoops and side support beams allows to obtain a correct distribution of the stress to the support beams.

In particular, the number of the portal hoops is variable according to the number of filtering plates of the machine and after length of the support beams.

The portal hoops are equally spaced from each other along the side support beams.

Advantageously, the couples of pneumatic cylinders are associated each to respective adjusting valves. The adjusting valves are functionally associated with a control unit, of type manual or automatic.

Advantageously, each couple of pneumatic cylinders or each pneumatic cylinder is associated with at least one regulation valve, a fluid distributor being associated with each regulation valve, said regulation valve and/or said fluid distributor being functionally associated with the control unit, of type manual or automatic, where the control unit adjusts the flow pneumatic on each couple of pneumatic cylinders, and, in particular, on each pneumatic cylinder taken singularly.

Preferably, each pneumatic cylinder comprises a cylinder body and a stem functionally put in the cylinder body, wherein each cylinder body is cantilevered mounted on the first fixed shoulder and extends from opposite edge with respect to the filtering plates, and wherein each stem is arranged between the first fixed shoulder and the shoulder mobile.

Being each stem fitted on the movable shoulder the handling the latter to move from the open configuration towards the closed configuration is carried out with a compression stroke to push the stems.

Vice-versa, by a stroke of tension of the stems the filtering plates are given by the closed configuration to the open configuration.

Advantageously, the filterpress according to the present invention comprises, furthermore, an opening system the filtering plates that comprises a first guide with a first actuation slider. The first guide extends according to said longitudinal axis X along a first edge of the support frame. A second guide with a second actuation slider is arranged at opposite edge to the first guide. Are, furthermore, provided hanging elements conformed as cantilever pins arranged on respective filtering plates on each respective edge of the same filtering plate.

The gripping means is arranged on the first and second actuation slider configured to pass selectively between a hooking configuration, wherein are arranged in a raised position for hook a corresponding hanging element at opposite sides on each filtering plate edge, and a free configuration wherein are arranged in a withdrawn position. Preferably, the gripping means comprises a gripper operated by an actuator.

An electronic control unit is configured to operate the first and of the second actuation slider and the gripper and it is programmed to control: the movement of the first and second actuation slider along respective side guides, and to operate the gripping means such that to reach and hook a first filtering plates group and moves them from said closed configuration to said open configuration.

Then, in turn achieving and hook a second filtering plates group, adjacent to the first group, and moves them from the closed configuration to the open configuration, with subsequent compaction of the first filtering plates group and thus repeat these steps in order to opening and unloading all the filtering plates.

### Description of the figures of the invention

Further characteristic and advantages of the invention are better shown by the examination of the following detailed description of a shape of preferred embodiment, but not exclusive, shown for example and not limitative, with the support of the attached drawings, wherein:
- Fig. 1 shows a perspective view of a filterpress according to the present invention, in an open configuration of the filtering plates;
- Fig. 2 shows a perspective view of a filterpress of Fig. 1 in a perspective that depicts the part side of the same;

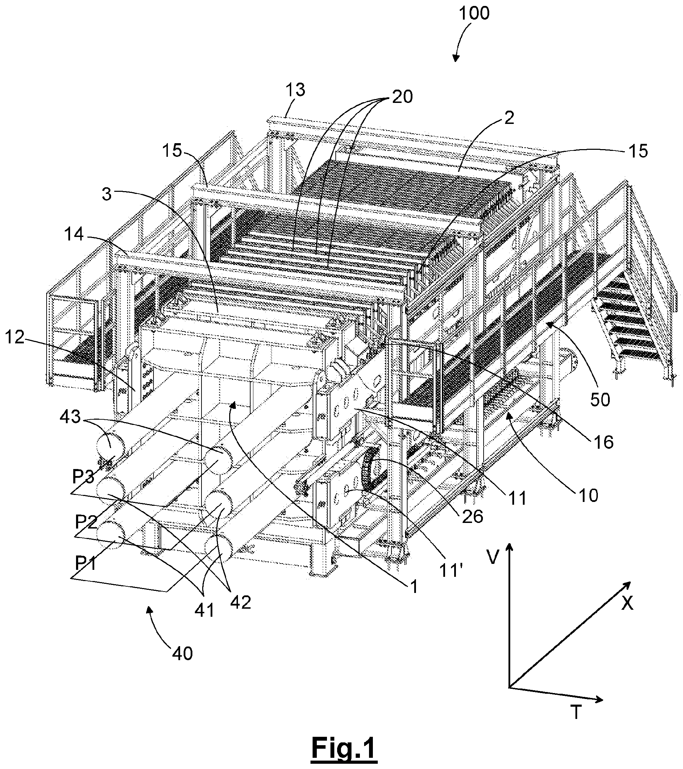

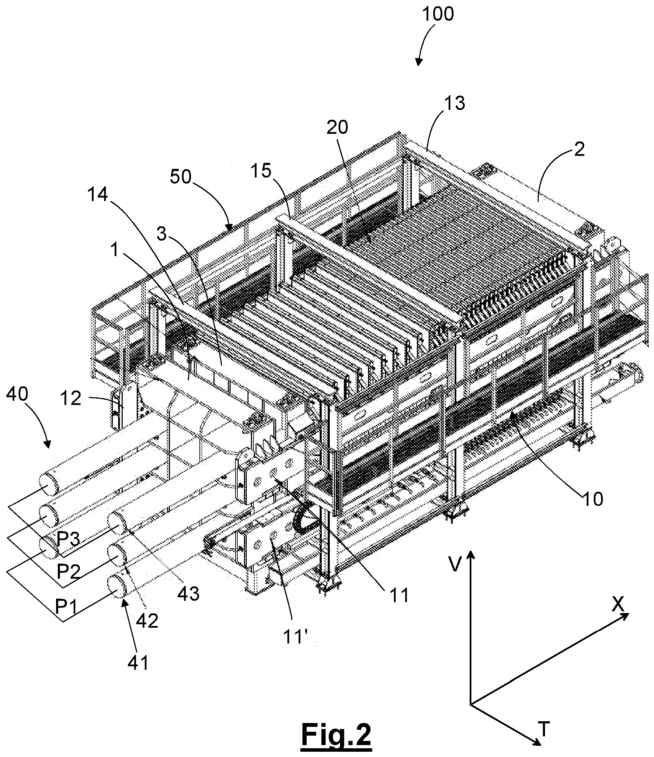

- Fig. 2 shows a perspective view of a filterpress of Fig. 1 in a perspective that depicts the rear part of the filterpress.

### Detailed description of the invention

With reference to Fig. 1, is shown a filterpress 100 according to the present invention. The filterpress structure comprises a support frame 10 with a first fixed shoulder 1 and a second fixed shoulder 2 opposite to each other.

A movable shoulder 3 is arranged between the first fixed shoulder 1 and the second fixed shoulder 2. With movable shoulder 3 is intended a plate portion that is sliding according to a longitudinal axis X that extends between the first fixed shoulder 1 and the second fixed shoulder 2. A plurality of filtering plates 20 are arranged between the movable shoulder 3 and the second fixed shoulder 2. The filtering plates 20 are arranged along the longitudinal axis X, to form a filtering plates package wherein the filtering plates are adjacent to each other.

The filterpress structure 100 comprises, furthermore, actuating means 40 arranged between the first fixed shoulder 1 and the movable shoulder 3, said actuating means 40 is adapted to move selectively the movable shoulder 3 in a compression stroke and in an opening stroke, opposite to the compression stroke, between a closed configuration, in which the filtering plates 20 are compacted against the second fixed shoulder 2, and an open configuration, in which selectively singularly or a groups of filtering plates 20 are spaced from each other for unloading the solid mud block, derivative from the dehydration of sludge put preliminarily in the chambers of the filtering plates 20.

In particular, the actuating means 40 comprise at least one first couple of actuating pneumatic cylinders 41 parallel to each other arranged on a first reference plane P1 , and a second couple of actuating pneumatic cylinders 42 parallel to each other arranged on a second reference plane P2 overlapped to the first reference plane P1. In other words, the second reference plane P2 is located at a different coordinate with respect to the first reference plane P1. The two planes are shifted to each other according to a vertical axis V orthogonal with respect to the longitudinal axis X.

Advantageously, is provided a third couple of actuating pneumatic cylinders 43 parallel to each other arranged on a third reference plane P3 overlapped, i.e. to a coordinate higher according to said vertical axis V, with respect to the second reference plane P2.

The arrangement of the couples of overlapped and stacked to each other along a vertically direction, and preferably aligned according to a transversal direction X in turn orthogonal to the vertical axis V, allows to obtain an homogeneously distributing load acting on the filtering plates, which have a relevant size. The pneumatic cylinders action is carried out with a push action in order to move said movable shoulder along the axis X, in a direction which tends to approach the movable shoulder 3 towards the second fixed shoulder 2. Vice-versa, the action of the pneumatic cylinders for opening the filtering plates 20 moves the movable shoulder 3 according along the axis X in a direction which tends to move away said movable shoulder 3 with respect to second fixed shoulder 2, to open the filtering plates 20.

A similar architecture allows, in the compression stroke to generate a higher load action that acts on the filtering plates 20 and especially an uniformly distributed load which acts on the movable shoulder 3 and therefore on the surface of the filtering plates 20.

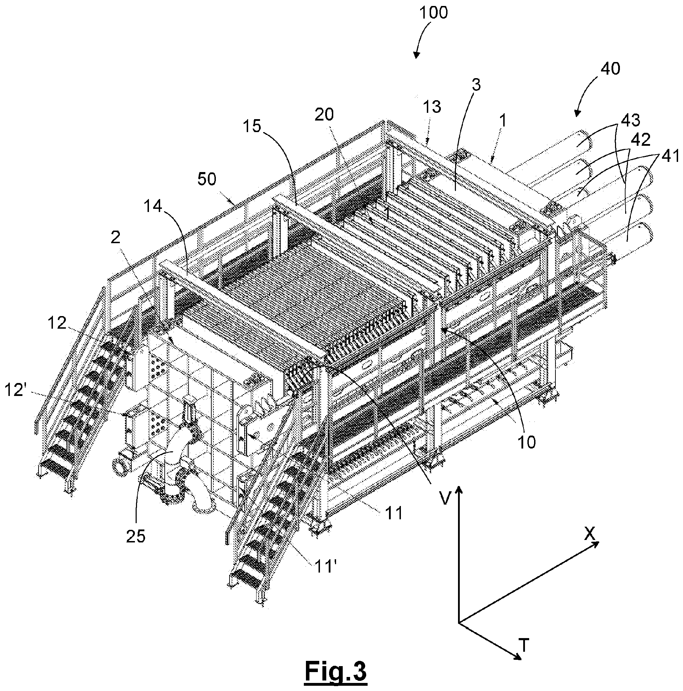

The same homogeneous load action finds advantages also in an opening phase of filtering plates, and especially with reference to the unloading and releasing of the solid mud block by gravity. Such architecture makes it possible to operate with an inlet pressure of sludge larger than 20 Bar. The sludge is pumped through an inlet duct 25 (Fig.3). The couples of cylinders 41, 42, 43 allow to keep the load derivative from the pressure and, therefore, to operate difficult material with high flow rate as input in the chambers of the filtering plates 20.

Furthermore, the architecture of the present invention allows to realize shoulders of large size about 2500x2600 mm2, according to which it is possible to obtain an increased performance about 160%, maintaining a structural conformation substantially unvaried, as described hereafter.

In an embodiment not part of invention, the support frame 10 comprises at least one first support beam 11 and a second support beam 12 that extend along the longitudinal axis X between the first 1 and the second fixed shoulder 2. The first support beam 11 and the second support beam 12 are arranged on opposite sides to each other with respect to the filtering plates 20.

Two couples of support beams 11, 11' and 12,12' that extend along the longitudinal axis X arranged on opposite sides to each other that extend between the first and second fixed shoulder 2 are provided. Each couple 11, 11' and 12, 12' is made by support beams 11, 11', 12, 12' parallel to each other.

The support beams 11, 11', 12, 12' act as a support and slide path for the filtering plates 20. In addition, allow to contrast mechanically the pushed action generated by the pneumatic cylinders during the compaction of the filtering plates 20.

Furthermore, the support frame 10 comprises at least one first portal hoops 13 and a second portal hoops 14 at a distance from each other along the longitudinal axis X, and integrally connected to the support beams 11, 11', 12, 12'.

This way, by a structural viewpoint, the combination of portal hoops 13, 14 and side support beams 11, 11', 12, 12' allows a correct distribution of the stress in the support beams 11, 11', 12, 12'.

In the exemplary embodiment shown are provided three portal hoops 13, 14, 1 5.

In particular, the number of the portal hoops is variable according to the number of filtering plates of the machine and after length of the support beams 11, 11', 12, 12'.

The portal hoops 13, 14, 15 are equally at a distance from each other along the support beams 11, 11', 12, 12' lateral.

Advantageously, the couples of pneumatic cylinders are associated each to respective adjusting valves. The adjusting valves are functionally associated with a control unit, of type manual or automatic.

Each couple of pneumatic cylinders or each pneumatic cylinder is associated with at least one regulation valve. A fluid distributor is associated with each regulation valve. Furthermore, the regulation valve and/or the fluid distributor are, in turn, functionally associated with the control unit, of type manual or automatic. Through the control unit it is possible to adjust the flow rate on each couple of pneumatic cylinders, and - in particular - on each pneumatic cylinder taken singularly.

Structurally, each pneumatic cylinder comprises a cylinder body and a stem functionally arranged in the cylinder body. The cylinder body is cantilevered mounted on the first fixed shoulder 1 and extends from opposite edge with respect to the filtering plates 20. The stem is instead arranged between the first fixed shoulder 1 and the movable shoulder 3.

Being each stem fitted on the movable shoulder 3, the relative stroke carries out by it, from the open configuration towards the closed configuration is carried out with a compression stroke that causes a pushing movement of the stems.

Vice-versa, by a traction stroke of the stems the filtering plates 20 passes from the closed configuration to the open configuration.

In one preferred embodiment, the filterpress according to the present invention, comprises, furthermore, an opening system adapted to control the filtering plates 20. Said opening system comprises a first guide, which advantageously, coincide or it is arranged on the first beam 11, with a first actuation slider. The first guide extends according to the longitudinal axis X along a first edge of the support frame 10. A second guide, which advantageously, coincide or it is arranged on the second beam 12, with a second actuation slider is arranged at opposite edge to the first guide. Are, furthermore, provided hanging elements 15 conformed as cantilever pins arranged on respective filtering plates 20 on each respective edge of the same filtering plate.

Gripping means 16 are arranged on the first and second actuation slider configured to pass selectively between: a hooking configuration, wherein are arranged in a raised position to hook corresponding hanging elements, said hanging element being arranged at opposite sides on each filtering plate, and a free configuration wherein remain in a withdrawn position. Preferably, the gripping means comprises a gripper operated by an actuator.

An electronic control unit is configured to control the first and of the second actuation slider and the gripper and is programmed to slide the first and second actuation slider along the respective guide and operate the gripping means in order to reach and hook a first filtering plates group 20 to pass them from said closed configuration to said open configuration.

Then, in turn achieving and hook a second filtering plates group 20, adjacent to the first group, to pass them from the closed configuration to the open configuration, with subsequent closure of the first filtering plates group 20 and thus repeat the same process to open and to unload all the filtering plates 20 of the filterpress.

To made inspections and carry out maintenance operations on the filtering plates 20 but also on the opening system, the filterpress 100 comprises, furthermore, a gangway structure 50 for an operator arranged on at least one edge of the same.

## Claims

1. A filterpress structure (100) comprising:
- a support frame (10) having a first fixed shoulder (1) and a second fixed shoulder (2) opposite to each other;
- a movable shoulder (3) arranged between said first fixed shoulder (1) and said second fixed shoulder (2),
- a plurality of filtering plates (20) functionally arranged between said movable shoulder (3) and said second fixed shoulder (2) that extend along a longitudinal axis (X);
- actuating means (40) that is adapted to move selectively said movable shoulder (3) between a closed configuration, in which said filtering plates (20) are compacted against said second fixed shoulder (2), and an open configuration, in which at least one plurality of filtering plates (20) are spaced from each other to unload a solid mud block;
wherein said actuating means (40) comprise at least one first couple of pneumatic actuating cylinders (41) parallel to each other arranged on a first reference plane (P1) and a second couple of pneumatic actuating cylinders (42) parallel to each other arranged on a second reference plane (P2) overlapped to said first reference plane (P1),
**characterized in that** said support frame comprises -two couples of side support beams (11, 11'), (12, 12') that extend along said longitudinal axis (X) between said first and second fixed shoulder (2), wherein said two couples of side support beams comprises a first couple of side support beams (11, 11') and a second couple of side support beams (12, 12'), wherein said first couple comprises said first support beam (11) and a third support beam (11') and wherein said second couple comprises said second support beam (12) and a fourth support beam (12'), wherein in particular each couple of side support beams (11, 11'), (12, 12') are parallel to each other,
wherein the first couple of side support beams (11, 11') and the second couple of side support beams (12, 12') are arranged on opposite side to each other with respect to the filtering plates (20);
- said support frame (10) comprises, furthermore, at least a first portal hoop (13) and a second portal hoop (14) integrally connected to said side support beams (11, 11'), (12, 12'), in particular said portal hoops are equally spaced from each other along said support beams (11, 11'), (12, 12').

2. Filterpress structure (100) according to claim 1, wherein a third couple of pneumatic actuating cylinders (43) parallel to each other arranged on a third reference plane (P3) overlapped to said second reference plane (P2) is provided.

3. Filterpress structure (100) according to any of the previous claims, wherein said couples of pneumatic actuating cylinders (41, 42, 43) are associated each to respective adjusting valves, in particular the adjusting valves are functionally associated with a control unit, of type manual or automatic.

4. Filterpress structure (100) according to any of the previous claims, wherein each couple of pneumatic actuating cylinders (41, 42, 43) or each pneumatic actuating cylinder is associated with at least one regulation valve, a fluid distributor being associated with each regulation valve, said regulation valve and/or said fluid distributor being functionally associated with the control unit, of type manual or automatic, where the control unit adjusts the flow rate on each couple of pneumatic actuating cylinders (41 , 42, 43), and, in particular, on each pneumatic actuating cylinder taken singularly.

5. Filterpress structure (100) according to any of the previous claims, wherein each pneumatic actuating cylinder (41, 42, 43) comprises a cylinder body and a stem functionally arranged in the cylinder body, wherein each cylinder body is cantilevered mounted on the first fixed shoulder (1) and extends from opposite edge with respect to the filtering plates (20), and wherein each stem is arranged between the first fixed shoulder (1) and the movable shoulder (3).

6. Filterpress structure (100) according to claim 1, wherein an opening system for filtering plates (20) is provided, said opening system comprising:
- a first guide, which coincide or it is arranged on the first beam (11), with a first actuation slider, said first guide extending according to said longitudinal axis (X) along a first edge of said support frame (10),
- a second guide, which coincide or it is arranged on the second beam (12), with a second actuation slider arranged at opposite edge with respect to said first guide;
- hanging elements (15) conformed as cantilever pins arranged on respective filtering plates (20) on each respective edge of a single filtering plate (20);
- gripping means (16) arranged on the first and second actuation slider configured to pass selectively between a hooking configuration, wherein said gripping means (16) are arranged in a raised position to hook an hanging element (15), and a free configuration wherein said gripping means (16) remains in a withdrawn position, in particular said gripping means comprises a gripper (16) operated by an actuator.

7. Filterpress structure (100) according to claim 6, wherein a control unit is provided, said control unit is configured to operate said first and second actuation slider and said gripper (16), and is also programmed to move said first and second actuation slider along the respective guide and operate the gripping means (16) in order to reach and hook a first filtering plates group (20) and pass them from said closed configuration to said open configuration, and wherein, in turn achieving and hook a second filtering plates group (20), adjacent to the first group, to pass them from said closed configuration to said open configuration, with subsequent closure of said first filtering plates group (20) and thus repeat the same process to open and to unload all the filtering plates 20 of the filterpress.

## Patentansprüche

1. Eine Filterpressenkonstruktion (100), umfassend:
- einen Stützrahmen (10) mit einer ersten festen Schulter (1) und einer zweiten festen Schulter (2), die einander gegenüberliegen;
- eine bewegliche Schulter (3), die zwischen der besagten ersten festen Schulter (1) und der besagten zweiten festen Schulter (2) angeordnet ist,
- eine Vielzahl von Filterplatten (20), funktional angeordnet zwischen der besagten beweglichen Schulter (3) und der besagten zweiten festen Schulter (2), die sich entlang einer Längsachse (X) erstrecken;
- ein Betätigungsmittel (40), das geeignet ist, die besagte bewegliche Schulter (3) wahlweise zu bewegen zwischen einer geschlossenen Konfiguration, in der die besagten Filterplatten (20) gegen die besagte zweite feste Schulter (2) gedrückt werden, und einer offenen Konfiguration, in der mindestens eine Vielzahl von Filterplatten (20) voneinander beabstandet sind, um einen festen Schlammblock zu entladen;
wobei die besagten Betätigungsmittel (40) mindestens ein erstes Paar pneumatischer Betätigungszylinder (41) umfassen, die parallel zueinander auf einer ersten Bezugsebene (P1) angeordnet sind, sowie ein zweites Paar pneumatischer Betätigungszylinder (42), die parallel zueinander auf einer zweiten Bezugsebene (P2) angeordnet sind, die die besagte erste Bezugsebene (P1) überlagert.,
**dadurch gekennzeichnet, dass** der besagte Stützrahmen Folgendes umfasst:
- zwei Paare seitlicher Stützbalken (11, 11'), (12, 12'), die sich entlang der besagten Längsachse (X) zwischen der besagten ersten und zweiten festen Schulter (2) erstrecken,
wobei die besagten beiden Paare seitlicher Stützbalken ein erstes Paar seitlicher Stützbalken (11, 11') und ein zweites Paar seitlicher Stützbalken (12, 12') umfassen, wobei das besagte erste Paar den besagten ersten Stützbalken (11) und einen dritten Stützbalken (11') umfasst und wobei das besagte zweite Paar den besagten zweiten Stützbalken (12) und einen vierten Stützbalken (12') umfasst, wobei insbesondere jedes Paar seitlicher Stützbalken (11, 11'), (12, 12') parallel zueinander sind,
wobei das erste Paar seitlicher Stützbalken (11, 11') und das zweite Paar seitlicher Stützbalken (12, 12') in Bezug auf die Filterplatten (20) einander gegenüberliegend angeordnet sind;
- besagter Stützrahmen (10) umfasst ferner mindestens einen ersten Portalbügel (13) und einen zweiten Portalbügel (14), die integral mit den besagten seitlichen Stützbalken (11, 11'), (12, 12') verbunden sind, wobei insbesondere die besagten Portalbügel in gleichen Abständen voneinander entlang der besagten Stützbalken (11, 11') angeordnet sind, (12, 12').

2. Filterpressenstruktur (100) gemäß Anspruch 1, wobei ein drittes Paar pneumatischer Betätigungszylinder (43) vorgesehen ist, die parallel zueinander auf einer dritten Bezugsebene (P3) angeordnet sind, die die besagte zweite Bezugsebene (P2) überlappt.

3. Filterpressenstruktur (100) gemäß einem jeden der vorhergehenden Ansprüche, wobei die besagten Paare pneumatischer Betätigungszylinder (41, 42, 43) jeweils mit entsprechenden Einstellventilen verbunden sind, insbesondere sind die Einstellventile funktionsmäßig mit einer Steuereinheit des manuellen oder automatischen Typs verbunden.

4. Filterpressenstruktur (100) gemäß einem jeden der vorhergehenden Ansprüche, wobei jedes Paar pneumatischer Betätigungszylinder (41, 42, 43) oder jeder pneumatische Betätigungszylinder mit mindestens einem Regelventil verbunden ist, wobei ein Fluidverteiler mit jedem Regelventil verbunden ist, wobei das besagte Regelventil und/oder der Fluidverteiler funktionsmäßig mit der Steuereinheit des manuellen oder automatischen Typs verbunden ist, wobei die Steuereinheit die Durchflussmenge auf jedem Paar pneumatischer Betätigungszylinder (41, 42, 43) und insbesondere die Durchflussmenge auf jedem einzelnen pneumatischen Betätigungszylinder einstellt.

5. Filterpressenstruktur (100) gemäß einem jeden der vorhergehenden Ansprüche, wobei jeder pneumatische Betätigungszylinder (41, 42, 43) einen Zylinderkörper und einen funktionsmäßig im Zylinderkörper angeordneten Zapfen umfasst, wobei jeder Zylinderkörper freitragend auf der ersten festen Schulter (1) angebracht ist und sich von der gegenüberliegenden Kante in Bezug auf die Filterplatten (20) erstreckt, und wobei jeder Zapfen zwischen der ersten festen Schulter (1) und der beweglichen Schulter (3) angeordnet ist.

6. Filterpressenstruktur (100) gemäß Anspruch 1, wobei ein Öffnungssystem für Filterplatten (20) vorgesehen ist,
wobei das besagte Öffnungssystem Folgendes umfasst:
- eine erste Führung, die mit dem ersten Balken (11) übereinstimmt oder auf diesem angeordnet ist, mit einem ersten Betätigungsschieber, wobei sich die besagte erste Führung entsprechend der besagten Längsachse (X) entlang einer ersten Kante des besagten Stützrahmens (10) erstreckt,
- eine zweite Führung, die mit dem zweiten Balken (12) übereinstimmt oder auf diesem angeordnet ist, mit einem zweiten Betätigungsschieber, der an der gegenüberliegenden Kante in Bezug auf die besagte erste Führung angeordnet ist;
- hängende Elemente (15) in Form von Auslegerstiften, die auf den jeweiligen Filterplatten (20) an jeder jeweiligen Kante einer einzelnen Filterplatte (20) angeordnet sind;
- Greifmittel (16), die auf dem ersten und zweiten Betätigungsschieber angeordnet sind, konfiguriert, um selektiv zu wechseln zwischen einer Einhakkonfiguration, wobei die besagten Greifmittel (16) in einer angehobenen Position angeordnet sind, um ein hängendes Element (15) einzuhaken, und einer freien Konfiguration, wobei die besagten Greifmittel (16) in einer zurückgezogenen Position verbleiben, wobei insbesondere die besagten Greifmittel einen Greifer (16) umfassen, der durch einen Aktuator betätigt wird.

7. Filterpressenstruktur (100) gemäß Anspruch 6, wobei eine Steuereinheit vorgesehen ist, wobei die besagte Steuereinheit konfiguriert ist, um den besagten ersten und zweiten Betätigungsschieber und den besagten Greifer (16) zu betätigen, und ferner programmiert ist, um den besagten ersten und zweiten Betätigungsschieber entlang der jeweiligen Führung zu bewegen und die Greifmittel (16) zu betätigen, um eine erste Filterplattengruppe (20) zu erreichen und zu greifen und sie von der besagten geschlossenen Konfiguration in die besagte offene Konfiguration zu überführen, und wobei sie abwechselnd eine zweite Filterplattengruppe (20), angrenzend an die erste Gruppe, erreicht und ergreift, um sie von der besagten geschlossenen Konfiguration in die besagte offene Konfiguration zu überführen, mit anschließendem Schließen der besagten ersten Filterplattengruppe (20) und somit Wiederholen des gleichen Vorgangs, um alle Filterplatten 20 der Filterpresse zu öffnen und zu entladen.

## Revendications

1. Structure de filtre-presse (100) comprenant :
- un châssis de support (10) comportant un premier épaulement fixe (1) et un deuxième épaulement fixe (2) opposés l'un à l'autre ;
- un épaulement mobile (3) disposé entre ledit premier épaulement fixe (1) et ledit deuxième épaulement fixe (2),
- une multitude de plaques filtrantes (20) disposées de manière fonctionnelle entre ledit épaulement mobile (3) et ledit deuxième épaulement fixe (2) qui s'étendent le long d'un axe longitudinal (X) ;
- des moyens d'actionnement (40) adaptés pour déplacer sélectivement ledit épaulement mobile (3) entre une configuration fermée, dans laquelle lesdites plaques filtrantes (20) sont compactées contre ledit deuxième épaulement fixe (2), et une configuration ouverte, dans laquelle au moins une multitude de plaques filtrantes (20) sont espacées les unes des autres pour décharger un bloc de boue solide ;
où lesdits moyens d'actionnement (40) comprennent au moins une première paire de vérins pneumatiques d'actionnement (41) parallèles entre eux, disposés sur un premier plan de référence (P1), et une deuxième paire de vérins pneumatiques d'actionnement (42) parallèles entre eux, disposés sur un deuxième plan de référence (P2) superposé audit premier plan de référence (P1), **caractérisé en ce que** ledit châssis de support comprend deux paires de poutres de support latérales (11, 11'), (12, 12') qui s'étendent le long dudit axe longitudinal (X) entre lesdits premier et deuxième épaulements fixes (2) où lesdites paires de poutres de support latérales comprennent une première paire de poutres de support latérales (11, 11') et une deuxième paire de poutres de support latérales (12, 12'), où ladite première paire comprend ladite première poutre de support (11) et une troisième poutre de support (11') et où ladite deuxième paire comprend ladite deuxième poutre de support (12) et une quatrième poutre de support (12'), où, en particulier, chaque paire de poutres de support latérales (11, 11'), (12, 12') est parallèle l'une à l'autre, où la première paire de poutres de support latérales (11, 11') et la deuxième paire de poutres de support latérales (12, 12') sont disposées sur des côtés opposés l'une par rapport à l'autre par rapport aux plaques de filtrage (20) ;
- ledit châssis de support (10) comprend en outre au moins un premier arceau en portique (13) et un deuxième arceau en portique (14) reliés de manière solidaire auxdites poutres de support latérales (11, 11'), (12, 12'), en particulier lesdits arceaux en portique sont espacés de manière égale les uns des autres le long desdites poutres de support (11, 11'), (12, 12').

2. Structure de filtre-presse (100) selon la revendication 1, où un troisième couple de vérins pneumatiques (43) parallèles entre eux est disposé sur un troisième plan de référence (P3) superposé audit deuxième plan de référence (P2).

3. Structure de filtre-presse (100) selon l'une quelconque des revendications précédentes, où lesdites paires de vérins pneumatiques d'actionnement (41, 42, 43) sont associées chacune à des vannes de réglage respectives, en particulier les vannes de réglage sont associées fonctionnellement à une unité de commande, de type manuel ou automatique.

4. Structure de filtre-presse (100) selon l'une quelconque des revendications précédentes, où chaque paire de vérins pneumatiques d'actionnement (41, 42, 43) ou chaque vérin pneumatique est associé à au moins une vanne de régulation, un distributeur de fluide étant associé à chaque vanne de régulation, ladite vanne de régulation et/ou ledit distributeur de fluide étant associés fonctionnellement à l'unité de commande, de type manuel ou automatique, où l'unité de commande règle le débit sur chaque paire de vérins pneumatiques (41, 42, 43) et, en particulier, sur chaque vérin pneumatique pris individuellement.

5. Structure de filtre-presse (100) selon l'une quelconque des revendications précédentes, où chaque vérin pneumatique (41, 42, 43) comprend un corps de vérin et une tige agencée fonctionnellement dans le corps de vérin, où chaque corps de vérin est monté en porte-à-faux sur le premier épaulement fixe (1) et s'étend à partir du bord opposé par rapport aux plaques filtrantes (20), et où chaque tige est agencée entre le premier épaulement fixe (1) et l'épaulement mobile (3).

6. Structure de filtre-presse (100) selon la revendication 1, où un système d'ouverture pour des plaques filtrantes (20) est prévu, ledit système d'ouverture comprenant :
- un premier guide (11) avec un premier curseur d'actionnement, ledit premier guide s'étendant selon ledit axe longitudinal (X) le long d'un premier bord dudit cadre de support (10),
- un deuxième guide, qui coïncide ou est disposé sur la deuxième poutre (12), avec un deuxième curseur d'actionnement disposé à l'extrémité opposée par rapport audit premier guide ;
- des éléments de suspension (15) conformés en broches en porte-à-faux disposés sur les plaques filtrantes respectives (20) sur chaque bord respectif d'une seule plaque filtrante (20) ;
- des moyens de préhension (16) disposés sur le premier et deuxième curseur d'actionnement, configurés pour passer sélectivement entre une configuration d'accrochage, où lesdits moyens de préhension (16) sont disposés dans une position relevée pour accrocher un élément de suspension (15), et une configuration libre où lesdits moyens de préhension (16) restent dans une position rétractée, en particulier lesdits moyens de préhension comprennent une pince (16) actionnée par un actionneur.

7. Structure de filtre-presse (100) selon la revendication 6, où une unité de commande est prévue, ladite unité de commande étant configurée pour actionner lesdits premier et deuxième curseurs d'actionnement et ladite pince (16), et étant également programmée pour déplacer lesdits premier et deuxième curseurs d'actionnement le long des guides respectifs et actionner les moyens de préhension (16) afin d'atteindre et d'accrocher un premier groupe de plaques filtrantes (20) et les faire passer de ladite configuration fermée à ladite configuration ouverte, et où, à son tour, atteindre et accrocher un deuxième groupe de plaques filtrantes (20), adjacent au premier groupe, pour les faire passer de ladite configuration fermée à ladite configuration ouverte, avec fermeture ultérieure dudit premier groupe de plaques filtrantes (20) et ainsi répéter le même processus pour ouvrir et décharger toutes les plaques filtrantes 20 du filtre-presse.
